# EUROPEAN PATENT APPLICATION

(11) **EP 4 535 534 A1**
(43) Date of publication of application: **09.04.2025**
(21) Application number: 23815131.0
(22) Date of filing: 29.05.2023
(51) Int. Cl.: H01M 50/244, H01M 50/24, H01M 50/231

(54) **BATTERY PROTECTION BOTTOM PLATE, COMPOSITE PROTECTION STRUCTURE FOR BATTERY PACK, AND VEHICLE**

(30) Priority: 31.05.2022 CN 202221349344 U
(71) Applicant: BYD Company Limited, Shenzhen, Guangdong 518118 (CN)
(72) Inventor: WAN, Long, Shenzhen, Guangdong 518118 (CN); LU, Zhipei, Shenzhen, Guangdong 518118 (CN); PENG, Qingbo, Shenzhen, Guangdong 518118 (CN); TAN, Zhijia, Shenzhen, Guangdong 518118 (CN); LI, Jianqiang, Shenzhen, Guangdong 518118 (CN)
(74) Representative: Mathys & Squire
(86) International application number: PCT/CN2023/096769
(87) International publication number: WO 2023/231950

(57) **Abstract**

A battery protection bottom plate, a composite protection structure for a battery pack, and a vehicle. The battery protection bottom plate comprises an upper fiber reinforced resin layer, a metal plate, a fiber reinforced resin frame, and a lower fiber reinforced resin layer; the metal plate and the fiber reinforced resin frame are located between the upper fiber reinforced resin layer and the lower fiber reinforced resin layer; the metal plate is located inside the fiber reinforced resin frame; the top surface of the fiber reinforced resin frame is integrally connected to the upper fiber reinforced resin layer; the bottom surface of the fiber reinforced resin frame is integrally connected to the lower fiber reinforced resin layer.

## Description

### CROSS-REFERENCE TO RELATED APPLICATIONS

The present disclosure is provided based on Chinese Patent Application No. 202221349344.X filed on May 31, 2022, and claims priority to the above Chinese Patent Application. The entire content of the above Chinese Patent Application is incorporated herein by reference.

### FIELD

The present disclosure relates to the technical field of batteries, and specifically, to a battery protection bottom plate, a battery pack composite protection structure, and a vehicle.

### BACKGROUND

A battery pack of a new energy electric vehicle is usually arranged at a bottom of the vehicle. Faced with complicated working conditions, the battery pack is susceptible to an impact from a hard object such as an external stone during vehicle driving. Therefore, it is usually necessary to take certain protective measures at a bottom of the battery pack to prevent the battery pack from being affected by the impact, which otherwise causes the problems of surface damage and electrolyte solution leakage. An existing battery pack bottom protection scheme is mainly to protect the bottom of the battery pack by providing a steel plate. In order to prevent the steel plate from being corroded by water vapor and other factors, an electrophoresis process is adopted for anti-corrosion treatment. In addition, since a bottom of the steel plate is directly exposed at a bottom of a vehicle body, it is necessary to spray a PVC layer with a thickness ranging from 0.5 mm to 1.2 mm on a side of the steel plate facing a ground so as to resist a stone impact, and prevent an electrophoretic layer from being scratched, thereby avoiding affecting an anti-corrosion effect.

An existing battery pack bottom protection structure has the following problems:
1. Low production efficiency: A flat steel plate has poor overall stiffness, so it is necessary to punch the steel plate. However, it is difficult to punch a high-strength steel plate used for the existing battery pack bottom protection structure, which has the problem of affecting production efficiency. In addition, after being punched, the steel plate needs to be transferred between an electrophoresis process and PVC spraying process, which has the problem of complicated preparation process.
2. Poor corrosion resistance: An existing steel plate is subjected to electrophoresis after punching and cutting to improve corrosion resistance, but electrophoretic paint has poor adhesion at a tip of a punching and cutting part. When an outer PVC layer is worn, an edge or a periphery of a hole of the steel plate is susceptible to corrosion in a conventional environment, which affects product quality.
3. Poor consistency: It is difficult to control uniformity of a spraying thickness of the PVC layer, which affects consistency of overall protective performance and has the disadvantage of weak protective ability.
4. High manufacturing costs: The electrophoresis process and PVC coating process on a surface of the steel plate have high costs.

### SUMMARY

Against the problems of poor resistance to an external impact, low production efficiency, high cost, poor corrosion resistance, poor consistency, and the like of an existing battery pack bottom protection structure, the present disclosure provides a battery protection bottom plate, a battery pack composite protection structure, and a vehicle.

The technical solutions adopted by the present disclosure to solve the above technical problems are as follows.

In a first aspect, the present disclosure provides a battery protection bottom plate, including an upper fiber reinforced resin layer, a metal plate, a fiber reinforced resin frame and a lower fiber reinforced resin layer. The metal plate and the fiber reinforced resin frame are located between the upper fiber reinforced resin layer and the lower fiber reinforced resin layer, and the metal plate is located inside the fiber reinforced resin frame. A top surface of the fiber reinforced resin frame is integrally connected to the upper fiber reinforced resin layer, and a bottom surface of the fiber reinforced resin frame is integrally connected to the lower fiber reinforced resin layer.

In some embodiments, the fiber reinforced resin frame is of a frame structure formed by connecting multiple frame plates end to end, and the fiber reinforced resin frame and the metal plate satisfy the following condition: 0.01 ≤ W / L ≤ 0.07, where W is a width of the frame plate in mm; and L is a length of the metal plate in mm.

In some embodiments, the width W of the frame plate ranges from 30 mm to 200 mm, and the length of the metal plate ranges from 1200 mm to 2200 mm.

In some embodiments, the upper fiber reinforced resin layer, the metal plate and the lower fiber reinforced resin layer each are of an approximately square sheet structure; and the fiber reinforced resin frame is of a sheet-like approximately square frame structure.

In some embodiments, in the fiber reinforced resin frame, the multiple frame plates have the same width, or the width of the frame plate extending along a widthwise direction of the fiber reinforced resin frame is greater than 1.2 times the width of the frame plate extending along a lengthwise direction of the fiber reinforced resin frame.

In some embodiments, the metal plate has a thickness ranging from 0.7 mm to 1.6 mm, and a thickness difference between the fiber reinforced resin frame and the metal plate is less than 0.1 mm.

In some embodiments, multiple mounting holes are spaced away in an inner side of an edge of the battery protection bottom plate, and the mounting holes sequentially run through the upper fiber reinforced resin layer, the fiber reinforced resin frame and the lower fiber reinforced resin layer.

In some embodiments, the upper fiber reinforced resin layer, the fiber reinforced resin frame and the lower fiber reinforced resin layer each are independently selected from a glass fiber reinforced polyamide resin member, a glass fiber reinforced polypropylene resin member, a glass fiber reinforced polyethylene resin member, a glass fiber reinforced polycarbonate resin member or a glass fiber reinforced polystyrene resin member.

In some embodiments, the upper fiber reinforced resin layer includes multiple layers of first fiber reinforced prepregs stacked with each other; the fiber reinforced resin frame includes multiple layers of second fiber reinforced prepregs stacked with each other; and the lower fiber reinforced resin layer includes multiple layers of third fiber reinforced prepregs stacked with each other.

In some embodiments, the metal plate is a steel plate, and a galvanized layer, a galvanized iron alloy layer or an electrophoretic paint protective layer is arranged at an outer surface of the steel plate.

In another aspect, the present disclosure provides a battery pack composite protection structure, including a battery pack and the battery protection bottom plate as described above. The battery protection bottom plate is arranged below the battery pack, and a buffer zone is formed between the battery pack and the battery protection bottom plate.

In some embodiments, the buffer zone is filled with a buffer layer, and the buffer layer is selected from a honeycomb material or a rigid foam material.

In still another aspect, the present disclosure provides a vehicle, including the battery protection bottom plate and the battery pack protection structure as described above.

In the battery protection bottom plate according to the present disclosure, the upper fiber reinforced resin layer and the lower fiber reinforced resin layer are compounded on a front surface and a back surface of the metal plate, so that on the one hand, the upper fiber reinforced resin layer and the lower fiber reinforced resin layer can improve corrosion resistance of the metal plate. In addition, the lower fiber reinforced resin layer can resist an impact of stones and the like on a bottom of the battery protection bottom plate, thereby avoiding the corrosion problem of an impacted part. On the other hand, after the upper fiber reinforced resin layer and the lower fiber reinforced resin layer are compounded with the metal plate, the stiffness and strength of the metal plate are effectively improved, and the metal plate has higher impact resistance. The upper fiber reinforced resin layer and the lower fiber reinforced resin layer feature uniform thickness, which ensures consistent strength and stiffness at different positions, so that the metal plate does not need to be additionally punched, thereby improving production efficiency and reducing production costs.

Further, according to the present disclosure, the fiber reinforced resin frame is arranged on a periphery of the metal plate as a frame connection transition member for the upper fiber reinforced resin layer and the lower fiber reinforced resin layer. This can effectively offset an influence of the thickness of the metal plate on frame connection for the upper fiber reinforced resin layer and the lower fiber reinforced resin layer, ensure the strength of a frame of the battery protection bottom plate, and further facilitate use of the frame of the battery protection bottom plate as a mounting structure of the battery protection bottom plate on a battery, and improve impact resistance of the battery protection bottom plate.

### BRIEF DESCRIPTION OF THE DRAWINGS

FIG. 1 is a schematic structural diagram of a battery protection bottom plate according to an embodiment of the present disclosure;
FIG. 2 is a schematic diagram showing matching between a metal plate and a fiber reinforced resin frame according to an embodiment of the present disclosure;
FIG. 3 is a schematic structural diagram of different first fiber reinforced prepreg unidirectional tapes in an upper fiber reinforced resin layer according to an embodiment of the present disclosure;
FIG. 4 is a schematic structural diagram of different first fiber woven fabric reinforced prepregs in an upper fiber reinforced resin layer according to an embodiment of the present disclosure;
FIG. 5 is a schematic structural diagram of a battery pack composite protection structure according to an embodiment of the present disclosure;
FIG. 6 is a schematic enlarged view of a part A of FIG. 5;
FIG. 7 is a schematic sectional view of a bottom of a battery pack composite protection structure according to an embodiment of the present disclosure;
FIG. 8 is a schematic sectional view of a bottom of a battery pack composite protection structure according to another embodiment of the present disclosure;
FIG. 9 is a schematic sectional view of a bottom of a battery pack composite protection structure according to still another embodiment of the present disclosure; and
FIG. 10 is a schematic diagram of a vehicle according to an embodiment of the present disclosure.

In the drawings:
100. Vehicle; 10. Battery pack composite protection structure;
1. Battery protection bottom plate; 11. Upper fiber reinforced resin layer; 110. First fiber reinforced prepreg; 111. First fiber reinforced prepreg unidirectional tape; 112. First fiber woven fabric reinforced prepreg; 12. Metal plate; 13. Fiber reinforced resin frame; 131. Frame plate; 14. Lower fiber reinforced resin layer; 15. Mounting hole; 2. Buffer layer; 3. Battery pack; 31. Tray; 4. Buffer zone.

### DETAILED DESCRIPTION

To make the to-be-solved technical problems, technical solutions and beneficial effects of the present disclosure clearer, the present disclosure is further described in detail below with reference to accompanying drawings and embodiments. It should be understood that the specific embodiments described herein are merely used to explain the present disclosure but are not intended to limit the present disclosure.

In the description of the present disclosure, it should be understood that orientation or position relationships indicated by the terms such as "upper", "lower", "top", "bottom", "inner" and "outer" are based on orientation or position relationships shown in the accompanying drawings, and are merely for ease of description of the present disclosure and simplification of the description, rather than indicating or implying that the apparatus or element referred to needs to have a specific orientation or be constructed and operated in a specific orientation, and therefore cannot be construed as limiting the present disclosure. In the description of the present disclosure, unless otherwise stated, "a plurality of/multiple" means two or more.

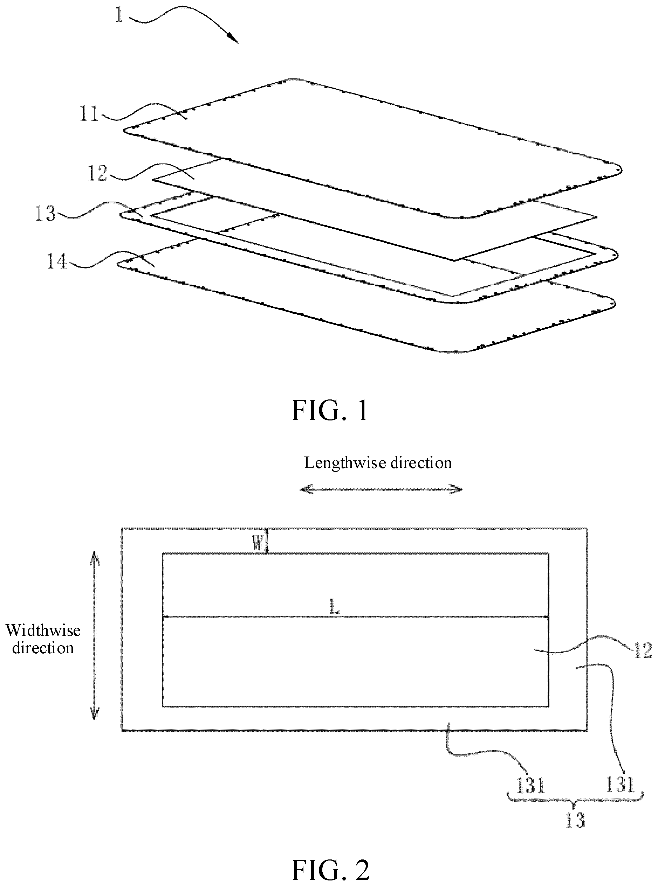

As shown in FIG. 1, an embodiment of the present disclosure provides a battery protection bottom plate 1, including an upper fiber reinforced resin layer 11, a metal plate 12, a fiber reinforced resin frame 13 and a lower fiber reinforced resin layer 14. The metal plate 12 and the fiber reinforced resin frame 13 are located between the upper fiber reinforced resin layer 11 and the lower fiber reinforced resin layer 14, and the metal plate 12 is located inside the fiber reinforced resin frame 13. A top surface of the fiber reinforced resin frame 13 is integrally connected to the upper fiber reinforced resin layer 11, and a bottom surface of the fiber reinforced resin frame 13 is integrally connected to the lower fiber reinforced resin layer 14.

The upper fiber reinforced resin layer 11 and the lower fiber reinforced resin layer 14 are compounded on a front surface and a back surface of the metal plate 12, so that on the one hand, the upper fiber reinforced resin layer 11 and the lower fiber reinforced resin layer 14 can improve corrosion resistance of the metal plate 12. In addition, the lower fiber reinforced resin layer 14 can resist an impact of stones and the like on a bottom of the battery protection bottom plate 1, thereby avoiding the corrosion problem of an impacted part. On the other hand, after the upper fiber reinforced resin layer 11 and the lower fiber reinforced resin layer 14 are compounded with the metal plate 12, the stiffness and strength of the metal plate 12 are effectively improved, and the metal plate has higher impact resistance. The upper fiber reinforced resin layer 11 and the lower fiber reinforced resin layer 14 feature uniform thickness, which ensures consistent strength and stiffness at different positions, so that the metal plate 12 does not need to be additionally punched, thereby improving production efficiency and reducing production costs.

Further, according to the present disclosure, the fiber reinforced resin frame 13 is arranged on a periphery of the metal plate 12 as a frame connection transition member for the upper fiber reinforced resin layer 11 and the lower fiber reinforced resin layer 14. This can effectively offset an influence of the thickness of the metal plate 12 on frame connection for the upper fiber reinforced resin layer 11 and the lower fiber reinforced resin layer 14, ensure the strength of a frame of the battery protection bottom plate 1, and further facilitate use of the frame of the battery protection bottom plate 1 as a mounting structure of the battery protection bottom plate on a battery pack 3, and improve impact resistance of the battery protection bottom plate.

In some embodiments, the fiber reinforced resin frame 13 is of a frame structure formed by connecting multiple frame plates 131 end to end, and the fiber reinforced resin frame 13 and the metal plate 12 satisfy the following condition: 0.01 ≤ W / L ≤ 0.07, where W is a width of the frame plate in mm; and L is a length of the metal plate in mm. For example, W / L may be 0.01, 0.03, 0.04, 0.05, 0.06, 0.07, or the like.

As shown in FIG. 2, it should be noted that the length L of the metal plate 12 is the length of a longer side of the metal plate 12.

The metal plate 12 is embedded in the middle of the fiber reinforced resin frame 13 and is fixed by the upper fiber reinforced resin layer 11 and the lower fiber reinforced resin layer 14. When the battery protection bottom plate 1 is impacted from the bottom, the metal plate 12 may vibrate up and down and conduct a stress, and then a tensile stress and a shear stress are formed at a joint between the metal plate 12 and the upper fiber reinforced resin layer 11, the lower fiber reinforced resin layer 14 and the fiber reinforced resin frame 13. When a tensile shear force exceeds a tolerable range of the joint, the problem of separation of delamination of the joint between the metal plate 12 and the upper fiber reinforced resin layer 11, the lower fiber reinforced resin layer 14 or the fiber reinforced resin frame 13 is likely to occur.

In order to solve this problem, the inventor has found through experiments that when mounted on a battery pack 3, the battery protection bottom plate 1 has a maximum overhanging amount in a lengthwise direction of the metal plate 12 under normal working conditions. When the metal plate 12 is impacted, a stress in the lengthwise direction thereof is greater, and delamination is more likely to occur, while the width of the frame plate 131 is related to resistance of the fiber reinforced resin frame 13 to a tensile shear effect generated when the metal plate 12 is impacted. Through the test summary, it is found that when the width W of the frame plate and the length L of the metal plate satisfy the relationship: 0.01 ≤ W / L ≤ 0.07, the tensile shear effect of the battery protection bottom plate 1 generated due to load bearing or an impact can be effectively borne, delamination in a fatigue zone can be avoided, and an amplitude of the battery protection bottom plate 1 can be kept in a suitable range to improve the impact strength of the battery protection bottom plate 1.

In an embodiment, the width W of the frame plate 131 ranges from 30 mm to 200 mm, and the length L of the metal plate 12 ranges from 1200 mm to 2200 mm.

When the width W of the frame plate 131 is in the above range, the battery protection bottom plate has a suitable mounting area, which effectively supports and locates the metal plate 12 on a middle portion thereof. For example, W may be 30 mm, 50 mm, 80 mm, 100 mm, 130 mm, 150 mm, 180 mm, 200 mm, or the like; and L may be 1200 mm, 1350 mm, 1500 mm, 1800 mm, 2000 mm, 2100 mm, 2200 mm, or the like.

In some embodiments, the upper fiber reinforced resin layer 11, the metal plate 12 and the lower fiber reinforced resin layer 14 each are of an approximately square sheet structure; and the fiber reinforced resin frame 13 is of a sheet-like approximately square frame structure. It should be noted that the square sheet structure means that the overall shape is roughly square, and the sheet-like square frame structure means that the overall shape is roughly square, while some details may be changed without affecting the overall shape. For example, a rounded corner is provided at a corner of the square, or a protrusion or a groove is provided at an edge of the square. The above-mentioned roughly square structure can better match the shape of the battery pack.

In some embodiments, the upper fiber reinforced resin layer 11 and the lower fiber reinforced resin layer 14 are consistent in shape to ensure connection stability of the upper fiber reinforced resin layer 11 and the lower fiber reinforced resin layer 14.

The shapes of the upper fiber reinforced resin layer 11 and the lower fiber reinforced resin layer 14 are adapted to the shape of the bottom of the battery pack 3. In other embodiments, when the battery pack 3 is in another shape, the upper fiber reinforced resin layer 11 and the lower fiber reinforced resin layer 14 may be in another adaptive shape, such as a triangle, a pentagon, or a hexagon.

In some embodiments, in the fiber reinforced resin frame 13, the multiple frame plates 131 have the same width.

As shown in FIG. 2, in some other embodiments, in the fiber reinforced resin frame 13, the width of the frame plate 131 extending along a widthwise direction of the fiber reinforced resin frame 13 is greater than 1.2 times the width of the frame plate 131 extending along a lengthwise direction of the fiber reinforced resin frame 13.

Increasing the width of the frame plate 131 extending in the widthwise direction of the fiber reinforced resin frame 13 is beneficial to improving the impact strength of the battery protection bottom plate 1 in the lengthwise direction.

In an embodiment, the metal plate 12 has a thickness ranging from 0.7 mm to 1.6 mm, and a thickness difference between the fiber reinforced resin frame 13 and the metal plate 12 is less than 0.1 mm. For example, the thickness of the metal plate 12 may be 0.7 mm, 0.9 mm, 1 mm, 1.2 mm, 1.5 mm, 1.6 mm, or the like.

When the thickness of the metal plate 12 is in the above range, the metal plate has good impact resistance and a low material cost.

When the thickness difference between the fiber reinforced resin frame 13 and the metal plate 12 is less than 0.1 mm, the fiber reinforced resin frame 13 can effectively fill a peripheral space of the metal plate 12, so as to connect the upper fiber reinforced resin layer 11 to the lower fiber reinforced resin layer 14, avoid a height difference between frames of the upper fiber reinforced resin layer 11 and the lower fiber reinforced resin layer 14 and ensure surface smoothness of the battery protection bottom plate 1. For example, the thickness difference between the fiber reinforced resin frame 13 and the metal plate 12 may be 0.09 mm, 0.08 mm, 0.07 mm, 0.05 mm, 0.02 mm, 0.01 mm, or the like.

In some embodiments, the fiber reinforced resin frame 13 and the metal plate 12 have the same thickness.

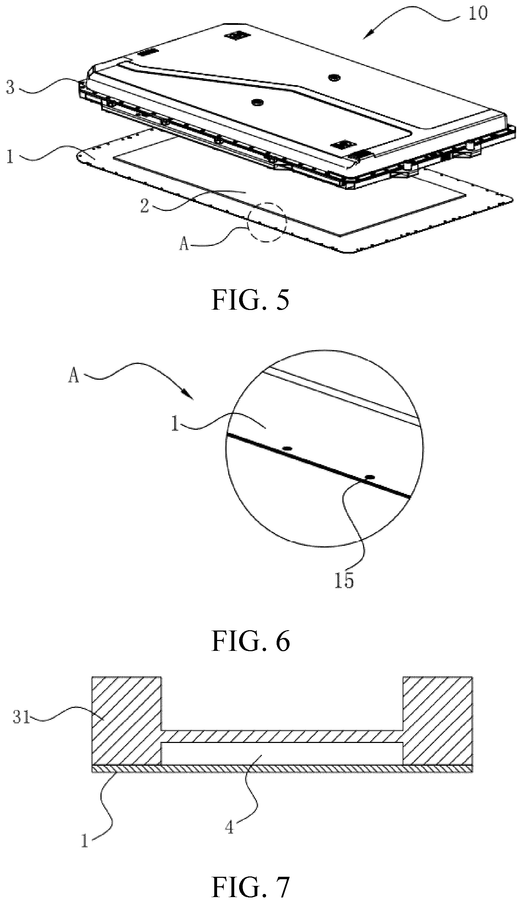

As shown in FIG. 6, in an embodiment, multiple mounting holes 15 are spaced away in an inner side of an edge of the battery protection bottom plate 1, and the mounting holes 15 sequentially run through the upper fiber reinforced resin layer 11, the fiber reinforced resin frame 13 and the lower fiber reinforced resin layer 14.

The mounting holes 15 are configured to mount and fasten the battery protection bottom plate 1 to a bottom of the battery pack 3. The mounting holes 15 are provided in the inner side of the edge of the battery protection bottom plate 1 and sequentially run through the upper fiber reinforced resin layer 11, the fiber reinforced resin frame 13 and the lower fiber reinforced resin layer 14, so that the mounting holes 15 can be prevented from running through the metal plate 12, and the corrosion problem caused by the exposure of the metal plate 12 at the mounting holes 15 can be avoided. In addition, the fiber reinforced resin frame 13 is beneficial to improving the overall thickness and tensile shear strength of a mounting position, and has sufficient mounting stability.

The multiple mounting holes 15 are provided around the periphery of the metal plate 12, so as to uniformly disperse a top gravity and a bottom impact force on the metal plate 12.

Specifically, during mounting, a connection member is provided to pass through the mounting hole 15 to secure the battery protection bottom plate 1 to the bottom of the battery pack 3. The connection member is a rivet, a screw or a bolt.

In different embodiments, resins of the upper fiber reinforced resin layer 11, the fiber reinforced resin frame 13 and the lower fiber reinforced resin layer 14 each are independently selected from thermosetting and/or thermoplastic materials. Examples may include, but are not limited to, an epoxy resin, phenolic plastic, phenols, cyanate esters, imides (such as polyimide, bismaleimide (BMI) and polyetherimide), polypropylenes, polyesters, benzoxazines, polybenzimidazoles, polybenzothiazoles, polyamides, polyamideimides, polysulfones, polyethersulfones, polycarbonates, polyethylene terephthalates and polyether ketones (such as polyether ketone (PEK), polyetheretherketone (PEEK) and polyether ketone ketone (PEKK)), and a combination thereof.

In different embodiments, fibers of the upper fiber reinforced resin layer 11, the fiber reinforced resin frame 13 and the lower fiber reinforced resin layer 14 each are independently selected from a glass fiber, an aramid fiber, a carbon fiber, a graphite fiber, a boron fiber, an aromatic polyamide fiber and a mixture thereof.

The fibers of the upper fiber reinforced resin layer 11, the fiber reinforced resin frame 13 and the lower fiber reinforced resin layer 14 may be embedded in resins in the form of chopped fibers, long-cut fibers, non-woven fabrics, unidirectional reinforced fiber base materials, woven fabrics, and the like.

In some embodiments, the upper fiber reinforced resin layer 11, the fiber reinforced resin frame 13 and the lower fiber reinforced resin layer 14 each are independently selected from a glass fiber reinforced polyamide resin member, a glass fiber reinforced polypropylene resin member, a glass fiber reinforced polyethylene resin member, a glass fiber reinforced polycarbonate resin member or a glass fiber reinforced polystyrene resin member.

In some embodiments, the fiber reinforced resin layer, the fiber reinforced resin frame 13 and the lower fiber reinforced resin layer 14 are made of a same resin material, and the same resin material can ensure affinity of materials between different layers, thereby ensuring an integration degree of combination between different layers and improving the overall strength.

In some embodiments, the upper fiber reinforced resin layer 11 includes multiple layers of first fiber reinforced prepregs 110 stacked with each other; the fiber reinforced resin frame 13 includes multiple layers of second fiber reinforced prepregs stacked with each other; and the lower fiber reinforced resin layer 14 includes multiple layers of third fiber reinforced prepregs stacked with each other.

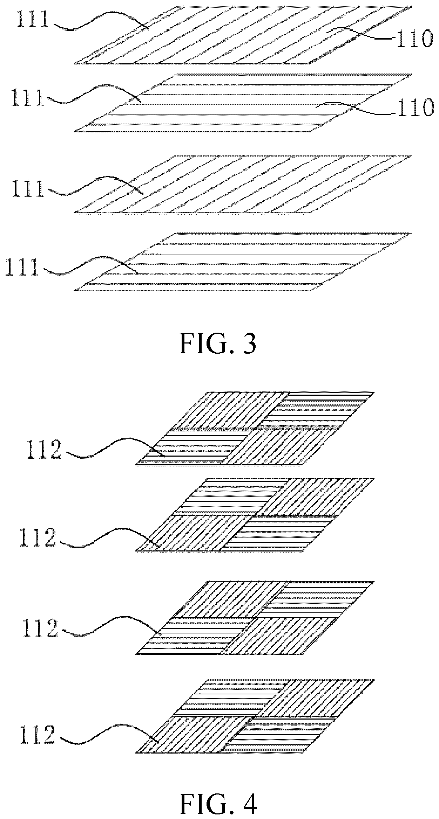

As shown in FIG. 3, in an embodiment, the upper fiber reinforced resin layer 11 includes multiple layers of first fiber reinforced prepreg unidirectional tapes 111 stacked with each other. Fiber arrangement directions of two adjacent layers of first fiber reinforced prepreg unidirectional tapes 111 are staggered at approximately 90°, and an allowable ply angle deviation range of two adjacent layers of first fiber reinforced prepreg unidirectional tapes 111 is ±20°.

Fibers of each first fiber reinforced prepreg unidirectional tape 111 are provided unidirectionally, and when subjected to a tensile force along a fiber extension direction, the fibers of the first fiber reinforced prepreg unidirectional tape 111 can effectively bear the tensile force. Stress uniformity of the upper fiber reinforced resin layer 11 in each direction is improved by staggering fiber arrangement directions of adjacent first fiber reinforced prepreg unidirectional tapes 111 at approximately 90°.

The fiber reinforced resin frame 13 includes multiple layers of second fiber reinforced prepreg unidirectional tapes stacked with each other. Fibers of each second fiber reinforced prepreg unidirectional tape are unidirectionally arranged. Fiber arrangement directions of two adjacent layers of second fiber reinforced prepreg unidirectional tapes are staggered at approximately 90°, and an allowable ply angle deviation range of two adjacent layers of second fiber reinforced prepreg unidirectional tapes is ±20°.

The lower fiber reinforced resin layer 14 includes multiple layers of third fiber reinforced prepreg unidirectional tapes stacked with each other. Fibers of each third fiber reinforced prepreg unidirectional tape are unidirectionally arranged. Fiber arrangement directions of two adjacent layers of third fiber reinforced prepreg unidirectional tapes are staggered at approximately 90°, and an allowable ply angle deviation range of two adjacent layers of third fiber reinforced prepreg unidirectional tapes is ±20°.

Fiber arrangements of the fiber reinforced resin frame 13 and the lower fiber reinforced resin layer 14 are similar to those of the upper fiber reinforced resin layer 11, and details are not repeated.

As shown in FIG. 4, in another embodiment, the upper fiber reinforced resin layer 11 includes multiple layers of first fiber woven fabric reinforced prepregs 112 stacked with each other, and fibers of each first fiber woven fabric reinforced prepreg 112 form a woven fabric in a staggered form.

The fiber reinforced resin frame 13 includes multiple layers of second fiber woven fabric reinforced prepregs stacked with each other, and fibers of each second fiber woven fabric reinforced prepreg form a woven fabric in a staggered form.

The lower fiber reinforced resin layer 14 includes multiple layers of third fiber woven fabric reinforced prepregs stacked with each other, and fibers of each third fiber woven fabric reinforced prepreg form a woven fabric in a staggered form.

In some embodiments, the metal plate 12 is selected from iron and an alloy thereof, aluminum and an alloy thereof, magnesium and an alloy thereof, copper and an alloy thereof, titanium and an alloy thereof or nickel and an alloy thereof.

In an embodiment, the metal plate 12 is a steel plate, and a galvanized layer, a galvanized iron alloy layer or an electrophoretic paint protective layer is arranged at an outer surface of the steel plate.

Compared with other metal materials, the steel plate used as the metal plate 12 has a better tensile strength and elongation, can satisfy requirements for impact resistance, and is beneficial to improving a protective effect on the battery pack 3.

The galvanized layer, the galvanized iron alloy layer or the electrophoretic paint protective layer is arranged at the outer surface of the steel plate, to improve corrosion resistance of the steel plate. When the upper fiber reinforced resin layer 11 or the lower fiber reinforced resin layer 14 is damaged, a galvanic effect formed by the galvanized layer or the galvanized iron alloy layer and the steel plate causes the galvanized layer or the galvanized iron alloy layer to corrode prior to the steel plate, thereby achieving a protective effect on the steel plate. The electrophoretic paint protective layer has good adhesion and can effectively isolate the steel plate from an external environment.

As shown in FIGS. 5 to 9, another embodiment of the present disclosure provides a battery pack composite protection structure 10, including a battery pack 3 and the battery protection bottom plate 1 as described above. The battery protection bottom plate 1 is arranged below the battery pack 3, and a buffer zone 4 is formed between the battery pack 3 and the battery protection bottom plate 1.

Due to the adoption of the above battery protection bottom plate 1, which has good protection strength, the battery pack composite protection structure 10 can effectively buffer a stress on the battery pack 3 and protect the battery pack under an external impact, and avoid damage to the battery pack 3 caused by the external impact. In addition, the battery protection bottom plate 1 has good corrosion resistance, which can avoid the problem that corrosion resistance of the battery protection bottom plate 1 decreases due to the external impact.

In some embodiments, the battery pack 3 includes a tray 31 and a battery arranged on the tray 31.

In different embodiments, the buffer zone 4 may be provided between the battery pack 3 and the battery protection bottom plate 1 in different ways.

As shown in FIG. 7, in an embodiment, a bottom surface of the tray 31 is provided with a groove inward to form the buffer zone 4, and the battery protection bottom plate 1 is in the shape of a flat plate. The battery protection bottom plate 1 covers the buffer zone 4.

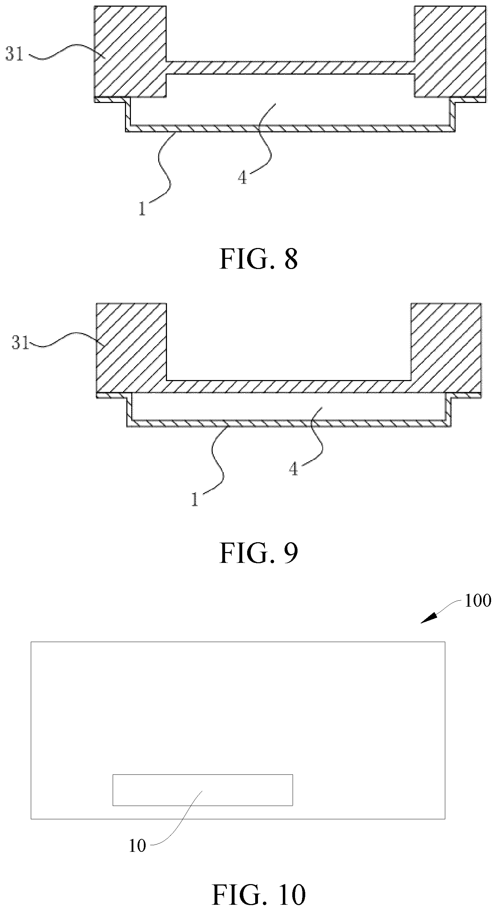

As shown in FIG. 8, in an embodiment, the frame of the battery protection bottom plate 1 is connected to the bottom surface of the tray 31, and the bottom surface of the tray 31 is internally provided with a groove. The battery protection bottom plate 1 protrudes in a direction facing away from the tray 31 to form the buffer zone 4 between the tray 31 and the battery protection bottom plate 1.

As shown in FIG. 9, in an embodiment, the frame of the battery protection bottom plate 1 is connected to the bottom surface of the tray 31, and the bottom surface of the tray 31 is a flat surface. The battery protection bottom plate 1 protrudes in a direction facing away from the tray 31 to form the buffer zone 4 between the tray 31 and the battery protection bottom plate 1.

In some embodiments, the buffer zone 4 is filled with a buffer layer 2, and the buffer layer 2 is selected from a honeycomb material or a rigid foam material.

The honeycomb material or the rigid foam material can absorb a collapse deformation space of the battery protection bottom plate 1 under an external strong impact, buffer and absorb part of energy of the external strong impact, and prevent compression deformation of the battery protection bottom plate 1 from impacting on internal battery cores of the battery pack, thereby further protecting the battery pack 3.

In some embodiments, the honeycomb material is selected from a PP honeycomb material or an aluminum honeycomb material; and the rigid foam material is selected from a PU rigid foam material, a PET rigid foam material, a PMI rigid foam material, a PVC rigid foam material, a PET rigid foam material, a MPP rigid foam material, a PLA rigid foam material, a PI rigid foam material or an EPTU rigid foam material.

Another embodiment of the present disclosure provides a vehicle 100, as shown in FIG. 10, including the battery protection bottom plate 1 or the battery pack composite protection structure 10 as described above.

The foregoing descriptions are merely preferred embodiments of the present disclosure, and are not intended to limit the present disclosure. Any modification, equivalent replacement, improvement, and the like made within the spirit and principle of the present disclosure shall fall within the protection scope of the present disclosure.

## Claims

1. A battery protection bottom plate (1), comprising an upper fiber reinforced resin layer (11), a metal plate (12), a fiber reinforced resin frame (13) and a lower fiber reinforced resin layer (14), the metal plate (12) and the fiber reinforced resin frame (13) being located between the upper fiber reinforced resin layer (11) and the lower fiber reinforced resin layer (14), the metal plate (12) being located inside the fiber reinforced resin frame (13), a top surface of the fiber reinforced resin frame (13) being integrally connected to the upper fiber reinforced resin layer (11), and a bottom surface of the fiber reinforced resin frame (13) being integrally connected to the lower fiber reinforced resin layer (14).

2. The battery protection bottom plate (1) according to claim 1, wherein the fiber reinforced resin frame (13) is of a frame structure formed by connecting a plurality of frame plates (131) end to end, and the fiber reinforced resin frame (13) and the metal plate (12) satisfy the following condition: 0.01 ≤ W / L ≤ 0.07, wherein W is a width of the frame plate (131) in mm; and L is a length of the metal plate (12) in mm.

3. The battery protection bottom plate (1) according to claim 2, wherein the width W of the frame plate (131) ranges from 30 mm to 200 mm, and the length of the metal plate (12) ranges from 1200 mm to 2200 mm.

4. The battery protection bottom plate (1) according to claim 2 or 3, wherein the upper fiber reinforced resin layer (11), the metal plate (12) and the lower fiber reinforced resin layer (14) each are of a square sheet structure; and
the fiber reinforced resin frame (13) is of a sheet-like square frame structure.

5. The battery protection bottom plate (1) according to claim 4, wherein
in the fiber reinforced resin frame (13), the plurality of frame plates (131) have the same width, or
the width of the frame plate (131) extending along a widthwise direction of the fiber reinforced resin frame (13) is greater than 1.2 times the width of the frame plate (131) extending along a lengthwise direction of the fiber reinforced resin frame (13).

6. The battery protection bottom plate (1) according to any one of claims 1 to 5, wherein the metal plate (12) has a thickness ranging from 0.7 mm to 1.6 mm, and a thickness difference between the fiber reinforced resin frame (13) and the metal plate (12) is less than 0.1 mm.

7. The battery protection bottom plate (1) according to any one of claims 1 to 6, wherein a plurality of mounting holes (15) are spaced away in an inner side of an edge of the battery protection bottom plate (1), and the mounting holes (15) sequentially run through the upper fiber reinforced resin layer (11), the fiber reinforced resin frame (13) and the lower fiber reinforced resin layer (14).

8. The battery protection bottom plate (1) according to any one of claims 1 to 7, wherein the upper fiber reinforced resin layer (11), the fiber reinforced resin frame (13) and the lower fiber reinforced resin layer (14) each are independently selected from a glass fiber reinforced polyamide resin member, a glass fiber reinforced polypropylene resin member, a glass fiber reinforced polyethylene resin member, a glass fiber reinforced polycarbonate resin member or a glass fiber reinforced polystyrene resin member.

9. The battery protection bottom plate (1) according to any one of claims 1 to 8, wherein the upper fiber reinforced resin layer (11) comprises a plurality of layers of first fiber reinforced prepregs (110) stacked with each other;
the fiber reinforced resin frame (13) comprises a plurality of layers of second fiber reinforced prepregs stacked with each other; and
the lower fiber reinforced resin layer (14) comprises a plurality of layers of third fiber reinforced prepregs stacked with each other.

10. The battery protection bottom plate (1) according to any one of claims 1 to 9, wherein the metal plate (12) is a steel plate, and a galvanized layer, a galvanized iron alloy layer or an electrophoretic paint protective layer is arranged at an outer surface of the steel plate.

11. A battery pack composite protection structure (10), comprising a battery pack (3) and the battery protection bottom plate (1) according to any one of claims 1 to 10, the battery protection bottom plate (1) being arranged below the battery pack (3), and a buffer zone (4) being formed between the battery pack (3) and the battery protection bottom plate (1).

12. The battery pack composite protection structure (10) according to claim 11, wherein the buffer zone (4) is filled with a buffer layer (2), and the buffer layer (2) is selected from a honeycomb material or a rigid foam material.

13. A vehicle (100), comprising the battery protection bottom plate (1) according to any one of claims 1 to 10 or the battery pack composite protection structure (10) according to claim 11 or 12.
